# EUROPÄISCHE PATENTSCHRIFT

(11) **EP 1 128 930 B1**
(45) Veröffentlichungstag und Bekanntmachung des Hinweises auf die Patenterteilung: **11.09.2002**
(21) Anmeldenummer: 99953889.5
(22) Anmeldetag: 20.10.1999
(51) Int. Cl.: B23Q 1/70, B23Q 5/04, B23B 29/04, B23Q 37/00, B23Q 3/155, B23Q 1/26

(54) **WERKZEUGKOPF MIT SPINDELLAGERUNG**
TOOL HEAD WITH SPINDLE BEARING ARRANGEMENT
TETE D'OUTIL A LOGEMENT DE BROCHE

(30) Priorität: 11.11.1998 DE 19852049
(43) Veröffentlichungstag der Anmeldung: 05.09.2001
(73) Patentinhaber: Sauter Feinmechanik GmbH, D-72555 Metzingen (DE)
(72) Erfinder: SAHM, Detlef, Dieter, D-73669 Lichtenwald (DE); DIERINGER, Jochen, D-72379 Hechingen-Stetten (DE); EBERLE, Michael, D-72581 Dettingen (DE)
(74) Vertreter: Patentanwälte Bartels und Partner
(86) Internationale Anmeldenummer: EP9907945
(87) Internationale Veröffentlichungsnummer: WO00027579

(56) Entgegenhaltungen:
- EP-A- 0 259 517
- DE-A- 3 529 481
- DE-A- 3 913 139
- DE-A- 3 930 154
- DE-C- 3 345 414
- DE-C- 3 436 938
- US-A- 4 856 153

## Beschreibung

Die Erfindung betrifft einen Werkzeugkopf mit Spindellagerung mit den Merkmalen des Oberbegriffes des Patentanspruches 1.

Vergleichbare Werkzeugköpfe sind beispielsweise als Einspindel-Werkzeugköpfe ausgebildet zur Aufnahme von stillstehenden oder rotierenden Werkzeugen für eine Dreh- bzw. Fräsbearbeitung mit Produktionsmaschinen. Ferner erlauben dahingehende Werkzeugköpfe den automatischen Werkzeugwechsel. Insbesondere bei Dreharbeiten mit einem feststehenden Werkzeug kommt es dabei zu hohen Beanspruchungen der Spindellagerung, die eine Drehbearbeitung nur in vorgebbaren Betriebsgrenzen erlauben, um eine Schädigung der Spindel lagerung auszuschließen. Des weiteren lassen sich Bearbeitungen meist nur in einer vorgebbaren Achse realisieren und Bearbeitungen entlang kompliziert aufbauender Bahngeometrien sind nicht möglich.

Durch die DE 39 13 139 C2 ist ein Werkzeugkopf mit Spindellagerung bekannt, wobei für eine Bearbeitung mit einem feststehenden Werkzeug die Spindel gegenüber dem Gehäuse über eine Hirthverzahnung als Arretierung verriegelt ist. Als Antriebseinrichtung für die Verriegelung dienen außenumfangsseitig um die Spindel herum angeordnete Druckkolben, die einen Verzahnungsring gegen Stirnverzahnungsringe des Gehäuses und der Spindel drücken. Der hierbei entstehende Gegendruck wird an ein Verschiebestück weitergegeben, das sich an den inneren und äußeren Lagerschalen der Spindellagerung abstützt, um derart in der verriegelten oder arretierten Position ein axiales Spiel in den Lagern durch Druckkräfte zu beseitigen. Bei dieser bekannten Lösung werden also die Lager der Spindel für eine Bearbeitung mit einem feststehenden Werkzeug verspannt und die Lager sind derart belastet. Dies führt mikroskopisch gesehen in der Art von einer Reiboder Diffusionsschweißung zu einer Beschädigung der Lager mit Reduzierung der Standzeit.

Durch die US-A4 856 153 ist ein gattungsgemäßer Werkzeugkopf mit Spindellagerung bekannt, deren Lager sich mit ihrer einen Lagerschale an einer antreibbaren Spindel mit Werkzeugaufnahme für den Antrieb eines Werkzeuges abstützen und mit ihrer anderen Lagerschale mit einem Gehäuse zusammenwirken, wobei zumindest bei einem Teil der Lager die jeweils andere Lagerschale mit einem Verschiebestück zusammenwirkt, das längs des Gehäuses mittels einer Antriebseinrichtung verschiebbar in der einen Verschieberichtung die Spindel mit dem Gehäuse über eine Arretierung in einer Verriegelungsstellung für die Bearbeitung mit einem feststehenden Werkzeug verriegelt und in der anderen Verschieberichtung in einer Freigabesteliung für eine Bearbeitung mit einem rotierenden Werkzeug freigibt, und wobei in der Verriegelungs- oder Freigabestellung das Verschiebestück mittels der Antriebseinrichtung mit einer vorgebbaren Anlagekraft die Arretierung herstellt bzw. bei gelöster Arretierung sich an das Gehäuse anlegt. Mit dieser bekannten Lösung läßt sich in der Verriegefungsstellung mit Arretierung der Spindel zumindest teilweise eine wirksame Lagerentlastung erreichen, was die Standzeit entsprechend erhöht.
Durch die EP-A-0 259 517 ist ein ähnlicher Werkzeugkopf mit Spindellagerung bekannt, deren Lager sich mit ihrer einen Lagerschale an einer antreibbaren Spindel mit Werkzeugaufnahme für den Antrieb eines Werkzeuges abstützen und mit ihrer anderen Lagerschale mit einem Gehäuse zusammenwirken. Dabei ist die jeweils andere Lagerschale des einen Teils der Lager zumindest teilweise von diesem Verschiebestück umfaßt. Auch insoweit ergibt sich eine Entlastung für die genannten Lagerstellen.

Ausgehend von diesem Stand der Technik liegt der Erfindung die Aufgabe zugrunde, einen demgegenüber universell einsetzbaren Werkzeugkopf zu schaffen, mit dem sowohl eine Fräs- als auch eine Drehbearbeitung möglich ist mit noch weiter verbesserter Entlastung der Spindellagerung bei feststehendem Werkzeug, wobei die Entlastungseinrichtung für die Spindellagerung innerhalb des Werkzeugkopfes einen geringen Bauraum einnehmen soll. Eine dahingehende Aufgabe löst ein Werkzeugkopf mit den Merkmalen des Patentanspruches 1.

Dadurch, daß gemäß dem kennzeichnenden Teil des Patentanspruches 1 die jeweils andere Lagerschale des einen Teils der Lager zumindest teilweise von dem Verschiebestück umfaßt ist, daß das Verschiebestück aus zwei getrennten Verschiebekolben gebildet ist, die in eine der beiden Verschieberichtungen verschiebbar und mittels eines Kraftspeichers in die jeweils andere Verschieberichtung rückstellbar sind, und daß der eine Verschiebekolben im Bereich des Werkzeugs in der Art einer Pinole ausgebildet ist und der andere Verschiebekolben im verriegelten Zustand in Anlage mit der Spindel gehalten ist, läß sich in der Verriegelungsstellung mit Arretierung der Spindel eine wirksamere Lagerentlastung als bei den bekannten Lösungen erreichen, so daß die Betriebsgrenzen bei der spanenden Bearbeitung, insbesondere mit feststehendem Werkzeug, noch weitergezogen werden können als bisher.

Mit der erfindungsgemäßen Anordnung ist bei einer Bearbeitung mit rotierendem Werkzeug das Verschiebestück, das den relevanten Teil der Lager für die Spindel umfaßt, durch die Kraft der Antriebseinrichtung gegen das Gehäuse verspannt und der Kraftfluß wird von der Spindel über die Spindellagerung mit Verschiebestück in das Gehäuse abgeleitet. Hierbei ist die Spindellagerung hoch belastet, was jedoch keine Rolle spielt, da sie für den dahingehenden umlaufenden Betrieb rechnerisch und konstruktiv ausgelegt ist. Wird mit einem feststehenden Werkzeug gearbeitet, beispielsweise für eine Drehbearbeitung, wird die Spindel mittels der Arretierung vorzugsweise mit einer Hirthverzahnung versehen, mit dem Gehäuse fest verbunden und das Verschiebestück ist im wesentlichen kräftefrei und zwischen Anschlägen frei bewegbar im Gehäuse gelagert. Da das Verschiebestück die relevanten Lager an der zugeordneten Lagerschale umfaßt, sind die dahingehenden Lager und Lagerschalen gleichfalls kräftefrei gehalten und ein schädigender Kräfteeintrag in die Spindellagerung bei Bearbeitung mit einem feststehenden Werkzeug findet nicht statt. Dies führt zu einer deutlichen Standzeiterhöhung.

Durch die Funktionsaufteilung für das Verschiebestück in zwei Komponenten in Form der Verschiebekolben und das einer der Verschiebekolben in der Art einer Pinole ausgebildet ist, läßt sich platzsparend die beschriebene Entlastungseinrichtung innerhalb des Werkzeugkopfes unmittelbar im Bereich der Spindel unterbringen.

Bei einer weiteren besonders bevorzugten Ausführungsform des erfindungsgemäßen Werkzeugkopfes ist der eine Teil der Lager zwischen der Werkzeugaufnahme und der Arretierung angeordnet. Bei den bekannten Lösungen (DE 39 13 139 C2) ist die Anordnung dahingehend gewählt, daß die Arretierung in Form der Hirthverzahnung zwischen Werkzeugaufnahme und Spindellagerung angeordnet ist. Demgegenüber ist mit der erfindungsgemäßen Anordnung eine steifere Auslegung des Werkzeugsystems möglich, was den Bearbeitungsqualitäten insbesondere bei einer Bearbeitung mit stehendem Werkzeug zugute kommt.

Bei einer weiteren bevorzugten Ausführungsform des erfindungsgemäßen Werkzeugkopfes ist die Spindel im Bereich ihrer jeweiligen Enden in Lagern drehbar geführt, wobei die jeweiligen Lager am der Werkzeugaufnahme gegenüberliegenden Ende der Spindel mit ihrer anderen Lagerschale längsverschiebbar entlang des Gehäuses angeordnet sind. Vorzugsweise ist dabei vorgesehen, daß zum Verriegeln der Spindel mit dem Gehäuse als Arretierung eine Verzahnung dient und zum Entriegeln der Spindel das Verschiebestück in eine Zentrierung des Gehäuses verfahrbar ist. Hierdurch ist zum einen eine sichere Verriegelung erreicht und zum anderen über die Zentrierung eine sichere Verfahrbewegung des Verschiebestückes zwischen seinen Endanschlägen.

Bei einer weiteren besonders bevorzugten Ausführungsform des erfindungsgemäßen Werkzeugkopfes bringt in der Verriegelungsstellung das Verschiebestück die Spindel derart mit einer Antriebswelle in einer Verrastungsstellung in Eingriff, daß bei ihrer Drehbewegung das Gehäuse mit der Spindel in vorgebbaren Stellungen verschwenkbar ist. Vorzugsweise ist dabei für den Antrieb der Spindel mit ihrem Werkzeug die Antriebswelle vorgesehen, die mit der Spindel über eine Verzahnung verbunden ist, die diametral einander gegenüberliegend abwechselnd die Verrastung und den Antrieb der Spindel ermöglicht.

Der erfindungsgemäße Werkzeugkopf ist in der Art konzipiert, daß er senkrecht zur Rotationsachse der Werkzeugaufnahme geschwenkt werden kann, um derart in beliebigen linearen Bahnrichtungen eine Bearbeitung mit dem Werkzeug zu ermöglichen.

Sofern bei einer bevorzugten Ausführungsform für die Aufnahme der angesprochenen Antriebswelle ein eigenständiger Antrieb vorgesehen ist, können sowohl die Schwenkbewegung als auch die Rotation der Werkzeugaufnahme unabhängig voneinander ausgeführt werden, um derart äußerst komplexe dreidimensionale Bahngeometrien bei der Bearbeitung zu erreichen.

Weitere vorteilhafte Ausführungsformen des Werkzeugkopfes sind Gegenstand der sonstigen Unteransprüche.

Im folgenden wird der erfindungsgemäße Werkzeugkopf anhand der Zeichnung näher erläutert.

Es zeigen in prinzipieller und nicht maßstäblicher Darstellung die
- Fig. 1: die Gesamtanordnung des Werkzeugkopfes;
- Fig.2: in vergrößerter Darstellung die Spindellagerung nach Fig.1.

Eine Werkzeugaufnahme 1 ist in der Spindel 2 integriert. Das Spannen des nur teilweise dargestellten Werkzeuges 3 erfolgt über eine Schubstange 4, die entlang der Längs- oder Drehachse der Spindel 2 längsverschiebbar geführt ist und von einem nur teilweise dargestellten Tellerfederpaket 5 radial umfaßt ist, wobei es sich mit seinem einen der Werkzeugaufnahme 1 zugewandten Ende an einer Innenausnehmung der Spindel 2 abstützt und an seinem anderen gegenüberliegenden Ende an einer flanschartigen Verbreiterung der Schubstange 4. Das Lösen des Werkzeuges 3 erfolgt hydraulisch wiederum über die Schubstange 4 mit Hilfe des Hydraulikkolbens 6, der mittels eines Fluiddruckes im Arbeitsraum 7 beaufschlagt entgegen der Wirkung des Kraftspeichers in Form des Tellerfederpaketes 5 die Schubstange 4 zusammen mit der Werkzeugaufnahme 1 in Blickrichtung auf die Figuren gesehen nach links verschiebt. Der angesprochene Arbeitsraum 7 ist zum einen stirnseitig von dem Hydraulikkolben 6 begrenzt und ansonsten von dem Gehäuse 8 des Werkzeugkopfes. Die Schubstange 4 kann ebenso wie der Hydraulikkolben 6 mit Versorgungskanälen (nicht dargestellt) ausgeführt sein, um beispielsweise Kühischmierstoff vom Gehäuse 8 kommend an das Werkzeug 3 weiterzuleiten. Die möglichen Verfahrrichtungen des Hydraulikkolbens 6 zusammen mit der Schubstange 4 und der Werkzeugaufnahme 1 sind mit einem Doppelpfeil angegeben.

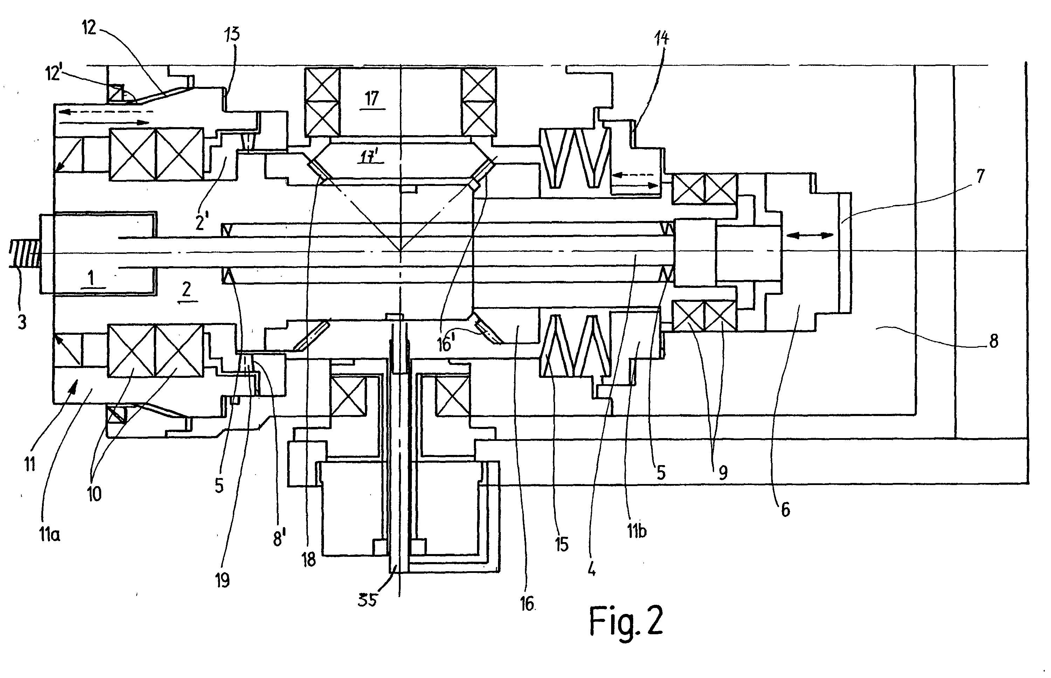

Die Spindel 2 kann zur Übertragung von Hilfsenergien od.dgl. ebenfalls in Längsrichtung durchbohrt (nicht dargestellt) sein. Die Spindel 2 ist ferner drehbar innerhalb des Gehäuses 8 gelagert, und zwar über die Lager 9 und 10. Die Lager 9 sind translatorisch über ihre äußere Lagerschale längsverschiebbar in der Ausnehmung des Gehäuses 8 geführt, in dem auch der Hydraulikkolben 6 translatorisch verschiebbar angeordnet ist. Die innere Lagerschale des jeweiligen Lagers 9 stützt sich an der Spindel 2 ab und ist von der Spindel 2 randseitig begrenzt (vgl. Fig.2). Die im Bereich der Werkzeugaufnahme 1 angeordneten beiden Lager 10 stützen sich wiederum mit ihrer inneren Lagerschale an der Spindel 2 ab und sind von dieser randseitig begrenzt und die jeweils äußeren Lagerschalen sind in einem als Ganzes mit 11 bezeichneten Verschiebestück aufgenommen.

Das als Ganzes mit 11 bezeichnete Verschiebestück besteht im wesentlichen aus zwei voneinander räumlich getrennten Verschiebekolben 11 a,11b, wobei der der Werkzeugaufnahme 1 zugewandte Verschiebekolben 11a in der Art einer Pinole ausgebildet ist, in der die Spindel 2 über die Lager 10 drehbar geführt ist. Der vordere Verschiebekolben 11 a weist als Verschiebestück 11 außenumfangsseitig einen Konus 12 auf, der mit einem korrespondierend ausgebildeten Innenkonus 12' des Gehäuses 8 zusammenwirkt. Um den Konus 12 gemäß der Darstellung in der Fig.2 in pressende Anlage mit dem Innenkonus 12' des Gehäuses 8 längs der strichlinierten Verschieberichtung zu verfahren, wird der Verschiebekolben 11a auf seiner der Werkzeugaufnahme 1 abgekehrten Seite mit einem Fluidoder Hydraulikdruck in der Fluidkammer 13 als Antriebseinrichtung beaufschlagt. Parallel hierzu und gleichzeitig wird der weitere Verschiebekolben 11b über einen korrespondierenden Fluiddruck in der Kammer 14 in der strichlinierten Verschieberichtung verfahren, und zwar entgegen der Wirkung eines weiteren Kraftspeichers als Teil der Antriebseinrichtung in Form des Tellerfederpaketes 15, das sich mit seinem einen Ende an dem Gehäuse 8 abstützt und an seinem anderen Ende an der der Kammer 14 gegenüberliegenden Stirnseite des Verschiebekolbens 11b. Aufgrund des derart aufgebrachten Fluiddruckes kommt der Konus 12 in Anlage mit dem Innenkonus 12' und der Verschiebekolben 11a als Teil des Verschiebestückes 11 nimmt über die Lager 10 die Spindel 2 gleichfalls in der strichlinierten Verschieberichtung um eine vorgebbare Wegstrecke mit. Bei der dahingehenden Verschiebebewegung nimmt die Spindel 2 auch die Lager 9 translatorisch in der Verschieberichtung mit und damit auch gleichzeitig die Schubstange 4.

Die Lagerstelle betreffend die Lager 10 sowie der Konus 12 sind nach außen in üblicher Weise abgedichtet.

Die Spindel 2 weist außenumfangsseitig ein Kegelrad 16 auf, das mit seiner Verzahnung 16' in Eingriff steht mit einer entsprechenden Verzahnung 17' einer Antriebswelle 17, die über entsprechende Lager in üblicher und daher nicht näher beschriebener Weise drehbar im Gehäuse 8 geführt ist. Diametral gegenüberliegend zur Eingriffsstelle der beiden Verzahnungen von Spindel 2 und Antriebswelle 17 ist an der Spindel 2 eine Rastverzahnung 18 vorhanden, die ebenso mit ihren Zahnflanken eine korrespondierende Neigung aufweist wie die Kegelradverzahnung 16'. Der mögliche Verschiebeweg der Spindel 2 ist dabei derart bemessen, daß in Richtung der strichlinierten Verschiebeposition die Verzahnungen 17'und 18 in Eingriff sind oder umgekehrt in der mit einer durchgezogenen Linie dargestellten Verschiebeposition die Verzahnungen 17'und 16' in Eingriff sind und die Verzahnungen 17' und 18 außer Eingriff sind. Kegelrad 16 und Rastverzahnung 18 sind dabei fest mit der eigentlichen Spindel 2 verbunden.

Die Spindel 2 weist des weiteren außenumfangsseitig einen Verzahnungsring 2' auf, der fest mit der Spindel 2 verbunden ist. Der Verzahnungsring 2' weist als Teil eine Hirth-Verzahnung 19 als Arretierung auf, deren andere Zahnreihe durch einen Verzahnungsring 8' gebildet ist, wobei der Verzahnungsring 8' wiederum fest mit dem Gehäuse 8 verbunden ist. In Richtung der strichliniert dargestellten Verschieberichtung am Verschiebestück 11 kommt die dahingehende Hirth-Verzahnung 19 zusammen mit der Rastverzahnung 18 außer Eingriff und in der mit einer durchgezogenen Linie dargestellten entgegengesetzt verlaufenden Verschieberichtung jeweils in Eingriff, wobei die Antriebs- oder Kegelradverzahnung 16' außer Eingriff kommt.

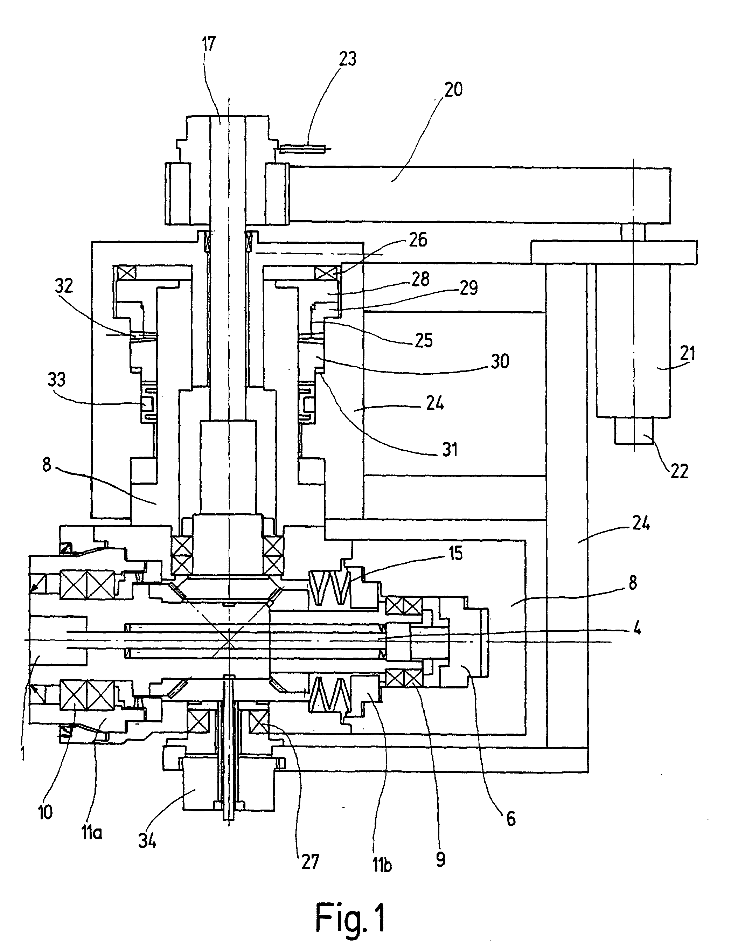

Wie insbesondere die Fig.1 zeigt, wird die Antriebswelle 17 mit der ihr zugeordneten Kegelradverzahnung über einen Riementrieb 20 sowie einen regelbaren Elektromotor 21 angetrieben, der mit einem Drehgeber 22 versehen ist. Eine Schalteinrichtung 23 dient der Drehlageerkennung der Antriebswelle 17, falls die Übersetzung des angesprochenen Riementriebes 20 eine andere sein sollte als 1 : 1. Ferner ist die Antriebswelle 17 über entsprechende übliche Lagerstellen im Gehäuse 8 sowie in einem weiteren Gehäuse 24 drehbar gelagert. Die Gehäuse 8 und 24 sind zueinander über die Lagerstellen 25,26 und 27 zueinander verdrehbar gelagert. In vorgebbaren Verdrehlagen der Gehäuse 8 und 24 zueinander werden diese über die dreigeteilte Hirth-Verzahnung 28,29,30 zueinander fixiert, indem die Fluidkammer 31 mit Druck beaufschlagt wird und derart der Verzahnungsring 30 in die Verzahnungen 28,29 eingreifen kann. Sollen die angesprochenen Gehäuse 8 und 24 in korrespondierenden Verdrehlagen fixiert werden, in denen die Verzahnungen der Hirth-Verzahnung 28,39,30 nicht übereinstimmen, läßt sich im Sinne einer Feinabstimmung der Fluidraum 32 mit hydraulischem Druck beaufschlagen, wobei dann der Verzahnungsring 30 der Hirth-Verzahnung als Hydraulikkolben die Klemmbuchse 33 betätigt, indem er diese radial aufweitet zwischen den Gehäusen 8 und 24. Die mögliche Schwenkbewegung der Gehäuse 8 und 24 zueinander wird über einen Winkelpositionsgeber 34 registriert, wobei der auf der Unterseite des Gehäuses 24 befestigte Näherungsschalter 35 mit zur Hub- und Verdrehlagekontrolle der Spindel 2 dient. Um eine definierte Fixierung des Verschiebestückes 11 zum Gehäuse 8 zu erhalten, kann anstelle des Konus 12,12' eine entsprechende, nicht näher dargestellte Hirth-Verzahnung in diesem Bereich zwischen dem vorderen Verschiebestück 11 und dem zugehörigen Gehäuse 8 vorgesehen sein.

Zum besseren Verständnis des erfindungsgemäßen Werkzeugkopfes wird dieser nunmehr anhand verschiedener Funktionsabläufe näher erklärt.

Für einen Werkzeugwechsel, vorzugsweise automatisch ausgeführt, ist zunächst das Gehäuse 8 zum Gehäuse 24 mit einer bestimmten Schwenklage zu fixieren. Die Spindel 2 ist dann über die Fluidkammern 13,14 und die zugeordneten Verschiebekolben 11a,b in den Innenkonus 12' des Gehäuses 8 geschoben und über den Motor 21 in einer bestimmten Verdrehlage gehalten.

Zum Lösen des eingesetzten Werkzeuges wird mit Hilfe des Hydraulikdruckes im Arbeitsraum 7 die Schubstange 4 über den Hydraulikkolben 6 in Richtung des Innenkonus 12' bewegt, wobei dabei das Tellerfederpaket 5 gespannt wird. Das Werkzeug kann dann durch einen externen, nicht näher dargestellten Wechsler in üblicher Weise entnommen und gegen ein anderes Werkzeug ausgetauscht werden. Zum Spannen dieses Werkzeuges wird dann der Arbeitsraum 7 drucklos geschaltet, so daß sich das Tellerfederpaket 5 entspannen kann, wobei die Schubstange 4 das Werkzeug 3 in die Werkzeugaufnahme 1 zieht. Die Vorspannkraft des Tellerfederpaketes 5 hält dann das Werkzeug 3 in der Aufnahme 1.

Für eine Schwenkbewegung der Spindel 2 mit ihrer Spindellagerung werden die Fluidkammern 13,14 drucklos geschaltet, so daß über das Tellerfederpaket 15 bedingt die Hirth-Verzahnung 19 verriegelt und die Rastverbindung über die Rastverzahnung 18 zwischen Antriebswelle 17 und Spindel 2 hergestellt ist. Durch anschließendes Drehen der Antriebswelle 17 mittels des Motors 21 wird das Gehäuse 8 verschwenkt, da die Spindel 2 über die Hirth-Verzahnung 19 mit dem Gehäuse 8 verbunden ist. Die dahingehende Drehbewegung läßt sich mit dem Winkelpositionsgeber 34 von der Steuerungsseite her überwachen. Nach Erreichen der vorgegebenen Schwenkposition wird dann das Gehäuse 8 mit Hilfe der weiteren Hirth-Verzahnung 28 bis 30 sowie des Fluidkammersystems 31,32 und der Klemmbuchse 33 gegenüber dem Gehäuse 24 festgelegt.

Für ein Arbeiten mit feststehendem Werkzeug im Sinne einer Drehbearbeitung sind die Gehäuse 8 und 24 gegeneinander in ihrer Lage fixiert. Die Fluidkammern 13 und 14 sind wiederum drucklos geschaltet, so daß die Hirth-Verzahnung 19 in ihrer wirksamen verriegelten Position ist. Die Spindel 2 ist dann dahingehend über die Verzahnungsringe 2' und 8' formschlüssig mit dem Gehäuse 8 verbunden. Unter dem Einfluß des Tellerfederpaketes 15 ist in der als durchgezogener Pfeil dargestellten Verschieberichtung der vordere Verschiebekolben 11a mit seinem Konus 12 aus dem Innenkonus 12' des Gehäuses 8 ausgeschoben und die Lager 10 sind demgemäß entlastet. Die Bearbeitungskraft wird nunmehr vom Werkzeug 3 direkt über die Spindel 2 auf das Gehäuse 8 übertragen.

Für ein Arbeiten mit rotierendem Werkzeug, also für eine Fräsbearbeitung, sind die Gehäuse 8 und 24 wiederum gegeneinander in ihrer Lage fixiert. Unter dem Fluiddruck in den Kammern 13, 14 ist nunmehr die Spindel 2 in Richtung des strichlinierten Pfeiles über den Konus 12 in den Innenkonus 12' geschoben, wobei der Kraftfluß vom Werkzeug 3 nunmehr über die Spindel 2, die Lager 10 sowie über den vorderen Verschiebekolben 11a in das Gehäuse 8 hergestellt ist. Die Hirth-Verzahnung 19 ist dann entriegelt und ebenso die Rastverzahnung 18. Die Spindel 2 kann dann mittels der Kegelradverzahnung 16' über die Antriebswelle 17 sowie den Riementrieb 20 und den Motor 21 angetrieben werden. Als Verdrehsicherung können die Konusteile 12 und 12' gleichfalls eine Verzahnung, insbesondere eine Hirth-Verzahnung, aufwiesen.

Mit dem erfindungsgemäßen Werkzeugkopf läßt sich also alternativ sowohl eine Drehbearbeitung als auch eine Fräsbearbeitung realisieren, wobei es bei der Drehbearbeitung zu einer wirksamen Lagerentlastung kommt. Des weiteren lassen sich die Gehäuseteile des Werkzeugkopfes zueinander verschwenken.

## Patentansprüche

1. Werkzeugkopf mit Spindellagerung, deren Lager (9,10) sich mit ihrer einen Lagerschale an einer antreibbaren Spindel (2) mit Werkzeugaufnahme (1) für den Antrieb eines Werkzeuges (3) abstützen und mit ihrer anderen Lagerschale mit einem Gehäuse (8) zusammenwirken, wobei zumindest bei einem Teil (10) der Lager (9,10) die jeweils andere Lagerschale mit einem Verschiebestück (11) zusammenwirkt, das längs des Gehäuses (8) mittels einer Antriebseinrichtung verschiebbar in der einen Verschieberichtung die Spindel (2) mit dem Gehäuse (8) über eine Arretierung in einer Verriegelungsstellung für die Bearbeitung mit einem feststehenden Werkzeug (3) verriegelt und in der anderen Verschieberichtung in einer Freigabestellung für eine Bearbeitung mit einem rotierenden Werkzeug (3) freigibt und wobei in der Verriegelungs- oder Freigabestellung das Verschiebestück (11) mittels der Antriebseinrichtung mit einer vorgebbaren Anlagekraft die Arretierung herstellt bzw. bei gelöster Arretierung sich an das Gehäuse (8) anlegt, **dadurch gekennzeichnet, daß** die jeweils andere Lagerschale des einen Teils (10) der Lager (9,10) zumindest teilweise von dem Verschiebestück (11) umfaßt ist, daß das Verschiebestück (11) aus zwei getrennten Verschiebekolben (11a,b) gebildet ist, die in eine der beiden Verschieberichtungen verschiebbar und mittels eines Kraftspeichers (15) in die jeweils andere Verschieberichtung rückstellbar sind, und daß der eine Verschiebekolben (11a) im Bereich des Werkzeugs (3) in der Art einer Pinole ausgebildet ist und der andere Verschiebekolben (11b) im verriegelten Zustand in Anlage mit der Spindel (2) gehalten, die Arretierung herstellt.

2. Werkzeugkopf mit Spindellagerung nach Anspruch 1, **dadurch gekennzeichnet, daß** die beiden getrennten Verschiebekolben (11a,b) mittels Fluiddruck als Antriebseinrichtung in eine der beiden Verschieberichtungen verschiebbar sind.

3. Werkzeugkopf mit Spindellagerung nach Anspruch 1 oder 2, **dadurch gekennzeichnet, daß** der eine Teil (10) der Lager (9,10) zwischen der Werkzeugaufnahme (1) und der Arretierung angeordnet ist.

4. Werkzeugkopf mit Spindellagerung nach einem der Ansprüche 1 bis 3, **dadurch gekennzeichnet, daß** die Spindel (2) im Bereich ihrer jeweiligen Enden in Lagern (9,10) drehbar geführt ist und daß die jeweiligen Lager (9) am der Werkzeugaufnahme (1) gegenüberliegenden Ende der Spindel (2) mit ihrer anderen Lagerschale längsverschiebbar entlang des Gehäuses (8) angeordnet sind.

5. Werkzeugkopf mit Spindellagerung nach einem der Ansprüche 1 bis 4, **dadurch gekennzeichnet, daß** zum Verriegeln der Spindel (2) mit dem Gehäuse (8) als Arretierung eine Hirthverzahnung (19) dient und zum Entriegeln der Spindel (2) das Verschiebestück (11) in eine Zentrierung des Gehäuses (8) verfahrbar ist.

6. Werkzeugkopf mit Spindel lagerung nach einem der Ansprüche 1 bis 5, **dadurch gekennzeichnet, daß** nach dem Verriegeln der Spindel (2) diese in drehfester Anlage mit dem Gehäuse (8) ist.

7. Werkzeugkopf mit Spindellagerung nach einem der Ansprüche 2 bis 5, **dadurch gekennzeichnet, daß** der andere Verschiebekolben (11 b) über ein Tellerfederpaket (15) als Kraftspeicher im verriegelten Zustand in Anlage mit der Spindel (2) gehalten ist.

8. Werkzeugkopf mit Spindellagerung nach Anspruch 7, **dadurch gekennzeichnet, daß** der eine Verschiebekolben (11a) in Richtung des Gehäuses (8) mit einem Konus (12) versehen ist für die Anlage an einen Innenkonus (12') des Gehäuses (8).

9. Werkzeugkopf mit Spindellagerung nach einem der Ansprüche 1 bis 8, **dadurch gekennzeichnet, daß** in der Verriegelungsstellung das Verschiebestück (11) die Spindel (2) derart mit einer Antriebswelle (17) in einer Verrastungsstellung in Eingriff bringt, daß bei ihrer Drehbewegung das Gehäuse (8) mit der Spindel (2) in vorgebbaren Stellungen verschwenkbar ist.

10. Werkzeugkopf mit Spindellagerung nach Anspruch 9, **dadurch gekennzeichnet, daß** für den Antrieb der Spindel (2) mit ihrem Werkzeug (3) die Antriebswelle (17) vorgesehen ist, die mit der Spindel (2) über eine Verzahnung (16') verbunden ist, die diametral einander gegenüberliegend abwechselnd die Verrastung und den Antrieb der Spindel (2) ermöglicht.

## Claims

1. A tool head with a spindle bearing arrangement, in which the bearings (9, 10) rest with one of their bearing bushes on a driven spindle (2) with a tool holding fixture (1) for driving a tool (3) and with their other bearing bush interacting with a housing (8), whereby at least at one part of the bearings (9, 10), the other respective bearing bush interacting with a sliding piece (11) driven by a driving device along the housing (8) in one direction to lock the spindle (2) to the housing (8) by means of a blocking device in a locking position for machining operating with a stationary tool (3) and in another direction to a release position for machining with a rotating tool (3), whereby in the locked or the release position, the sliding piece (11) produces by means of the drive device the locking action at a predetermined contact force or rests at the housing (8) when the lock is released, **characterised in that** the other respective bearing bush of one part (10) of the bearings (9, 10) is at least partly enclosed by the sliding piece (11), that the sliding piece (11) is formed by two separate displacement pistons (11a, b) slidable in one of the two directions and returnable in the other respective direction by an energy accumulator (15), and that one displacement piston (11a) is designed in the form of a quill in the area of the tool (3) and the other displacement piston (11b), held in a locked state in contact with the spindle (2), produces the locking action.

2. A tool head with a spindle bearing arrangement as in Claim 1, **characterised in that** the two separate displacement pistons (11a, b) are slidable in one of the two directions by hydraulic pressure as the drive device.

3. A tool head with a spindle bearing arrangement according to Claim 1 or 2, **characterised in that** one part (10) of the bearings (9, 10) is arranged between the tool holding fixture (1) and the locking device.

4. A tool head with a spindle bearing arrangement according to one of the Claims 1 to 3, **characterised in that** the spindle (2) is rotatable in bearings (9, 10) in the area of their respective ends and that the respective bearings are longitudinally slidable along the housing (8) with their other bearing bush at the end of the spindle opposite to the tool holding fixture (1).

5. A tool head with a spindle bearing arrangement according to one of the Claims 1 to 4, **characterised in that** Hirth teeth (19) are provided for locking the spindle (2) to the housing (8) and the sliding piece (11) can be moved to a centre in the housing (8) to release the spindle (2).

6. A tool head with a spindle arrangement according to one of the Claims 1 to 5, **characterised in that** the spindle (2) is secured against rotation at the housing (8) after it has been locked.

7. A tool head with a spindle bearing arrangement according to one of the Claims 2 to 5, **characterised in that** the other displacement piston (11b) is held locked in contact with the spindle (2) by a cup spring stack (15) serving as a force accumulator.

8. A tool head with a spindle bearing arrangement according to Claim 7, **characterised in that** one displacement piston (11a) is provided with a cone (12) in the direction of the housing (8), intended to abut an inside cone (12') in the housing.(8).

9. A tool head with a spindle bearing arrangement according to one of the Claims 1 to 8, **characterised in that**, in the locking position, the sliding piece (11) moves the spindle (2) into engagement with a drive shaft (17) in a locking position in such a manner that during its rotation the housing (8) can swivel with the spindle (2) in specified positions.

10. A tool head with a spindle bearing arrangement according to Claim 9, **characterised in that** the spindle (2) with its tool (3) is driven by the drive shaft (17) which is connected with the spindle (2) over a gear (16') which either locks or alternatively drives the spindle (2) in diametrically opposite positions.

## Revendications

1. Tête d'outil à logement de broche dont les coussinets (9, 10) s'appuient avec l'une de leurs coquilles de coussinet sur une broche (2) entraînable avec logement d'outil (1) pour l'entraînement d'un outil (3) et, avec l'autre coquille de coussinet, agissent en coopération avec un boîtier (8), moyennant quoi, au moins dans une partie (10) du coussinet (9, 10), l'autre coquille de coussinet agit en coopération avec une pièce de déplacement (11) qui verrouille la broche (2) avec le boîtier (8) par un dispositif d'arrêt dans une position de verrouillage pour l'usinage avec un outil fixe (3), déplaçable le long du boîtier (8) à l'aide d'un dispositif d'entraînement dans l'un des sens de déplacement et, dans l'autre sens de déplacement, la libère dans une position de libération pour un usinage avec un outil rotatif (3) et moyennant quoi, en position de verrouillage ou de libération, la pièce de déplacement (11) assure l'arrêt à l'aide du dispositif d'entraînement avec une force d'appui prédéterminable ou, lorsque le dispositif d'arrêt est desserré, s'appuie sur le boîtier (8), **caractérisée en ce que** l'autre coquille de coussinet d'une partie (10) du coussinet (9, 10) en entourée au moins partiellement par la pièce de déplacement (11), **en ce que** la pièce de déplacement (11) est constituée de deux pistons de déplacement séparés (11a, b) qui sont déplaçables dans l'un des deux sens de déplacement et qui sont rétractables dans l'autre sens de déplacement au moyen d'un accumulateur d'énergie (15), et **en ce que** l'un des pistons de déplacement (11a) est conçu à la manière d'une douille de broche dans la zone de l'outil (3) et **en ce que** l'autre piston de déplacement (11b) assure l'arrêt en position verrouillée appuyé contre la broche (2).

2. Tête d'outil à logement de broche selon la revendication 1, **caractérisée en ce que** les deux pistons de déplacement séparés (1a, b) sont déplaçables dans l'un des deux sens de déplacement comme dispositif d'entraînement à l'aide d'une pression de fluide.

3. Tête d'outil à logement de broche selon la revendication 1 ou 2, **caractérisée en ce qu'**une partie (10) des coussinets (9, 10) est placée entre le logement d'outil (1) et le dispositif d'arrêt.

4. Tête d'outil à logement de broche selon l'une des revendications 1 à 3, **caractérisée en ce que** la broche (2) est guidée en rotation dans la zone de ses extrémités respectives dans les coussinets (9, 10) et **en ce que** les coussinets respectifs (9, 10) sont disposés de manière à se déplacer longitudinalement le long du boîtier (8) avec leur autre coquille de coussinet à l'extrémité de la broche (2) opposée au logement d'outil (1).

5. Tête d'outil à logement de broche selon l'une des revendications 1 à 4, **caractérisée en ce qu'**une denture Hirth (19) sert de dispositif d'arrêt pour le verrouillage de la broche (2) avec le boîtier (8) et **en ce que** la pièce de déplacement (11) est déplaçable dans un centrage du boîtier (8) pour le déverrouillage de la broche (2).

6. Tête d'outil à logement de broche selon l'une des revendications 1 à 5, **caractérisée en ce que**, après le verrouillage de la broche (2), cette dernière est en appui résistant à la torsion contre le boîtier (8).

7. Tête d'outil à logement de broche selon l'une des revendications 2 à 5, **caractérisée en ce que** l'autre piston de déplacement (11b) est maintenu en position verrouillée en appui contre la broche (2) par l'intermédiaire d'un paquet de ressorts à disques (15) comme accumulateur d'énergie.

8. Tête d'outil à logement de broche selon la revendication 7, **caractérisée en ce que** l'un des pistons de déplacement (11a) est muni d'un cône (12) dans le sens du boîtier (8) pour l'appui -contre un cône intérieur (12') du boîtier (8).

9. Tête d'outil à logement de broche selon l'une des revendications 1 à 8, **caractérisée en ce que**, en position de verrouillage, la pièce de déplacement (11) engrène la broche (2) dans un arbre d'entraînement (17) dans une position d'engrènement de sorte que, lorsqu'il se déplace en rotation, le boîtier (8) pivote avec la broche (2) dans des positions prédéterminables.

10. Tête d'outil à logement de broche selon la revendication 9, **caractérisée en ce que** l'arbre d'entraînement (17) qui est prévu pour l'entraînement de la broche (2) avec son outil (3) est relié à la broche (2) par une denture (16') qui permet l'engrènement et l'entraînement de la broche (2) en alternance de manière diamétralement opposée.
